# EUROPÄISCHE PATENTSCHRIFT

(11) **EP 3 629 242 B1**
(45) Veröffentlichungstag und Bekanntmachung des Hinweises auf die Patenterteilung: **03.07.2024**
(21) Anmeldenummer: 18197650.7
(22) Anmeldetag: 28.09.2018
(51) Int. Cl.: G06V 10/764, G06V 10/82, G06F 18/243, G06V 10/44

(54) **VERFAHREN ZUM KONFIGURIEREN EINER BILDAUSWERTEEINRICHTUNG SOWIE BILDAUSWERTEVERFAHREN UND BILDAUSWERTEEINRICHTUNG**
METHOD FOR CONFIGURING AN IMAGE EVALUATING DEVICE AND IMAGE EVALUATION METHOD AND IMAGE EVALUATING DEVICE
PROCÉDÉ DE CONFIGURATION D'UN DISPOSITIF D'ÉVALUATION D'IMAGE AINSI QUE PROCÉDÉ D'ÉVALUATION D'IMAGE DISPOSITIF D'ÉVALUATION D'IMAGE

(43) Veröffentlichungstag der Anmeldung: 01.04.2020
(73) Patentinhaber: Siemens Healthcare Diagnostics Inc., Tarrytown, NY 10591 (US)
(72) Erfinder: Büttner, Florian, 81541 München (DE); Geipel, Markus Michael, 80799 München (DE); Marquardt, Gaby, 91353 Hausen (DE); Seidel, Daniela, 91083 Baiersdorf (DE); Tietz, Christoph, 85521 Ottobrunn (DE)
(74) Vertreter: Siemens Healthineers Patent Attorneys

(56) Entgegenhaltungen:
- WO-A1-2018/052587
- WO-A1-2018/140014
- CA-A1- 2 948 499
- US-A1- 2016 086 078
- ROUHI RAHIMEH ET AL: "Benign and malignant breast tumors classification based on region growing and CNN segmentation", EXPERT SYSTEMS WITH APPLICATIONS, OXFORD, GB, Bd. 42, Nr. 3, 27. September 2014 (2014-09-27), Seiten 990-1002, XP029095199, ISSN: 0957-4174, DOI: 10.1016/J.ESWA.2014.09.020
- Yuanpu Xie ET AL: "Beyond Classification: Structured Regression for Robust Cell Detection Using Convolutional Neural Network" In: "Serious Games", 1. Januar 2015 (2015-01-01), Springer International Publishing, Cham 032682, XP055561110, ISSN: 0302-9743 ISBN: 978-3-642-37803-4 Bd. 9351, Seiten 358-365, DOI: 10.1007/978-3-319-24574-4_43, * Sektion 2 *
- HENG LI ET AL.: "Cell dynamic morphology classification using deep convolutional neural networks", CITOMETRY PART A, Bd. 93A, 15. Mai 2018 (2018-05-15), Seiten 628-638, XP002789256, DOI: 10.1002/cyto.a.23490
- TRAVERS CHING ET AL.: "Opportunities and obstacles for deep learning in biology and medicine", J.R.SOC. INTERFACE, Bd. 15, Nr. 20170387, 181, 4. April 2018 (2018-04-04), Seiten 1-47, XP002789257, ISSN: 1742-5689, DOI: 10.1098/rsif.2017.0387
- LI ZHONGYU ET AL: "Large-scale Exploration of Neuronal Morphologies Using Deep Learning and Augmented Reality", NEUROINFORMATICS, HUMANA PRESS INC, BOSTON, Bd. 16, Nr. 3, 12. Februar 2018 (2018-02-12), Seiten 339-349, XP036568563, ISSN: 1539-2791, DOI: 10.1007/S12021-018-9361-5 [gefunden am 2018-02-12]
- NUH HATIPOGLU ET AL: "Cell segmentation in histopathological images with deep learning algorithms by utilizing spatial relationships", MEDICAL AND BIOLOGICAL ENGINEERING AND COMPUTING., Bd. 55, Nr. 10, 28. Februar 2017 (2017-02-28), Seiten 1829-1848, XP055523535, DE ISSN: 0140-0118, DOI: 10.1007/s11517-017-1630-1
- YAN ZHICHENG ET AL: "HD-CNN: Hierarchical Deep Convolutional Neural Networks for Large Scale Visual Recognition", 2015 IEEE INTERNATIONAL CONFERENCE ON COMPUTER VISION (ICCV), IEEE, 7 December 2015 (2015-12-07), pages 2740-2748, XP032866619, DOI: 10.1109/ICCV.2015.314 [retrieved on 2016-02-17]
- CERRI RICARDO ET AL: "Hierarchical multi-label classification using local neural networks", JOURNAL OF COMPUTER AND SYSTEM SCIENCES, ACADEMIC PRESS, INC., LONDON, GB, vol. 80, no. 1, 22 March 2013 (2013-03-22) , pages 39-56, XP028729154, ISSN: 0022-0000, DOI: 10.1016/J.JCSS.2013.03.007
- CHOI ET AL: "Exploiting hierarchical structure of classes in object classification using deep convolutional neural networks", THESIS, KOREA ADVANCED INSTITUTE OF SCIENCE AND TECHNOLOGY, KOREA , 1 January 2015 (2015-01-01), pages 1-40, XP009520962, Retrieved from the Internet: URL:https://koasas.kaist.ac.kr/handle/1020 3/206760 [retrieved on 2018-02-28]
- DEBOLEENA ROY ET AL: "Tree-CNN: A Deep Convolutional Neural Network for Lifelong Learning", ARXIV.ORG, CORNELL UNIVERSITY LIBRARY, 201 OLIN LIBRARY CORNELL UNIVERSITY ITHACA, NY 14853, 16 February 2018 (2018-02-16), XP080856810,

## Beschreibung

Zur automatischen Auswertung von Bildaufnahmen, zum Beispiel in der medizinischen Diagnostik, bei der Überwachung von technischen oder nichttechnischen Systemen und/oder im Rahmen der visuellen Sensorik von autonomen Systemen werden zunehmend Verfahren des maschinellen Lernens eingesetzt. Mittels dieser Verfahren kann eine lernbasierte Bildauswerteeinrichtung darauf trainiert werden, auf Bildern dargestellte Objekte automatisch zu erkennen oder einem Objekttyp zuzuordnen.

So kann beispielsweise eine Bildauswerteeinrichtung eines medizinischen Diagnosegerätes darauf trainiert werden, auf mikroskopischen Bildern Zell- oder Gewebetypen spezifisch zu erkennen bzw. jeweils einem Zell- oder Gewebetyp zuzuordnen. Insbesondere kann die Bildauswerteeinrichtung darauf trainiert werden, Bildaufnahmen von biologischen Zellen, z.B. von Blutzellen jeweils einem Zelltyp als Objekttyp sowie einem Entwicklungsstadium dieses Zelltyps als Objektsubtyp zuzuordnen.

Für ein solches Training wird häufig eine große Vielzahl von vorgegebenen Bildern verwendet, denen bereits ein Objekttyp und gegebenenfalls ein Objektsubtyp zugeordnet wurden. Mittels solcher Trainingsbilder kann eine lernbasierte Bildauswerteeinrichtung darauf trainiert werden, die vorgegebenen Objekttypen und gegebenenfalls Objektsubtypen möglichst gut zu reproduzieren, das heißt beispielsweise die Zelltypen und deren Entwicklungsstadien mit möglichst geringer Abweichung zu den vorgegebenen Objekttypen und Objektsubtypen zu erkennen. Zur Durchführung eines solchen Trainings steht eine Vielzahl bekannter Lernverfahren, insbesondere Verfahren des überwachten Lernens zur Verfügung.

In der Praxis kommt es indessen häufig vor, dass manche der zu erkennenden Objekttypen erheblich seltener auftreten als andere Objekttypen. So haben manche biologische Zelltypen, insbesondere pathologische Zelltypen nur einen Anteil von weniger als 0,005 % an allen Zelltypen. Dementsprechend stehen für seltene Objekttypen in der Regel erheblich weniger Trainingsbilder zur Verfügung als für häufigere Objekttypen. Wenn jedoch nur wenige Trainingsbilder zum Training verfügbar sind, können sich bei herkömmlichen Trainingsverfahren der Trainingserfolg und damit die Erkennungsgenauigkeit erheblich verschlechtern. Zudem lassen sich Subtypen seltener Objekttypen häufig nur schwer erkennen oder unterscheiden.

Gerade im medizinischen Bereich ist es jedoch oft wichtig, auch seltene pathologische Muster und Entwicklungsstadien möglichst korrekt zu identifizieren. Es ist bekannt, zur besseren Klassifikation von seltenen Objekttypen spezifische Bildmerkmale von Experten individuell zu ermitteln und das Training daran anzupassen. Alternativ oder zusätzlich kann das Training so lange fortgesetzt werden, bis hinreichend viele Trainingsbilder von seltenen Objekttypen ausgewertet sind. Durch die vorstehenden Verfahrensweisen kann jedoch ein erforderlicher Trainingsaufwand, insbesondere bei Vorliegen von seltenen Objekttypen erheblich steigen. YAN ZHICHENG ET AL: "HD-CNN: Hierarchical Deep Convolutional Neural Networks for Large Scale Visual Recognition",2015 IEEE INTERNATIONAL CONFERENCE ON COMPUTER VISION (ICCV), IEEE, 7. Dezember 2015 (2015-12-07), Seiten 2740-2748, offenbart ein "coarse-fine" neuronales Netzwerk, wobei die Objektsubtypen mittels eines Clustering-Schrittes ermittelt werden. DEBOLEENA ROY ET AL: "Tree-CNN: A Deep Convolutional Neural Network for Lifelong Learning", ARXIV.ORG, CORNELL UNIVERSITY LIBRARY, 201 OLIN LIBRARY CORNELL UNIVERSITY ITHACA, NY 14853, 16. Februar 2018 (2018-02-16), XP080856810, offenbart ein "coarse-fine" neuronales Netzwerk, wobei die "coarse" neuronalen Netzwerke und die "fine" neuronalen Netzwerke getrennt trainiert werden.

Es ist Aufgabe der vorliegenden Erfindung, ein Verfahren zum Konfigurieren einer Bildauswerteeinrichtung, ein Bildauswerteverfahren sowie eine Bildauswerteeinrichtung anzugeben, die ein effizienteres Training erlauben.

Gelöst wird diese Aufgabe durch ein Konfigurationsverfahren mit den Merkmalen des Patentanspruchs 1, durch ein Bildauswerteverfahren mit den Merkmalen des Patentanspruchs 9, durch eine Bildauswerteeinrichtung mit den Merkmalen des Patentanspruchs 12, durch ein Computerprogrammprodukt mit den Merkmalen des Patentanspruchs 13 sowie durch ein computerlesbares Speichermedium mit den Merkmalen des Patentanspruchs 14.

Zum Konfigurieren einer Bildauswerteeinrichtung zum Ermitteln eines Objekttyps und Objektsubtyps eines abgebildeten Objekts wird eine Vielzahl von jeweils einem Objekttyp und einem Objektsubtyp zugeordneten Trainingsbildern in ein erstes neuronales Netzmodul zur Erkennung von Bildmerkmalen eingespeist. Als Objekte können insbesondere biologische Zellen fungieren, deren jeweiliger Zelltyp als Objekttyp und deren jeweiliges Entwicklungsstadium oder Zellstatus als Objektsubtyp ermittelt werden können. Weiterhin werden Trainings-Ausgabedatensätze des ersten neuronalen Netzmoduls in ein zweites neuronales Netzmodul zur Erkennung von Objekttypen anhand von Bildmerkmalen eingespeist. Erfindungsgemäß werden das erste und das zweite neuronale Netzmodul gemeinsam darauf trainiert, dass Trainings-Ausgabedatensätze des zweiten neuronalen Netzmoduls die den Trainingsbildern zugordneten Objekttypen zumindest näherungsweise reproduzieren. Darüber hinaus werden für einen jeweiligen Objekttyp:
- diesem Objekttyp zugeordnete Trainingsbilder in das trainierte erste neuronale Netzmodul eingespeist,
- dessen für ein jeweiliges Trainingsbild generierter Trainings-Ausgabedatensatz dem Objektsubtyp des jeweiligen Trainingsbildes zugeordnet, und
- anhand dieser Subtyp-Zuordnungen ein Subtyp-Erkennungsmodul zum Erkennen von Objektsubtypen anhand von Bildmerkmalen für die Bildauswerteeinrichtung konfiguriert.

Durch eine Aufteilung der Konfiguration in ein datengetriebenes Training und eine objekttypspezifische Konfiguration können viele durch Mangel an objekttypspezifischen Trainingsdaten bedingte Nachteile herkömmlicher Trainingsverfahren gemildert werden.

Somit erweist sich das erfindungsgemäße Konfigurationsverfahren häufig als besonderes effizient für eine Ermittlung von Objektsubtypen seltener Objekttypen sowie allgemein bei einer starken Ungleichverteilung von Objekthäufigkeiten.

Mittels der wie vorstehend trainierten ersten und zweiten neuronalen Netzmodule sowie eines wie vorstehend konfigurierten Subtyp-Erkennungsmoduls kann ein erfindungsgemäßes Bildauswerteverfahren zum Ermitteln eines Objekttyps und Objektsubtyps eines abgebildeten Objekts implementiert werden. Hierbei wird ein auszuwertendes Bild in das trainierte erste neuronale Netzmodul eingespeist und ein resultierender Ausgabedatensatz des trainierten ersten neuronalen Netzmoduls in das trainierte, zweite neuronale Netzmodul eingespeist. Aus einem resultierenden Ausgabedatensatz des trainierten zweiten neuronalen Netzmoduls wird dann ein Objekttyp abgeleitet. Weiterhin wird ein für den abgeleiteten Objekttyp spezifisch konfiguriertes Subtyp-Erkennungsmodul selektiert, durch das ein mit dem Ausgabedatensatz des trainierten ersten neuronalen Netzmoduls korrelierender Objektsubtyp ermittelt wird. Schließlich werden der abgeleitete Objekttyp sowie der ermittelte Objektsubtyp ausgegeben.

Aufgrund einer zum erfindungsgemäßen Konfigurationsverfahren korrespondierenden Aufteilung des erfindungsgemäßen Bildauswerteverfahrens, erlaubt dieses Bildauswerteverfahren insbesondere bei einer starken Ungleichverteilung von Objekthäufigkeiten in der Regel eine zuverlässigere Ermittlung von Objektsubtypen seltener Objekttypen.

Zum Ausführen des erfindungsgemäßen Konfigurationsverfahrens und/oder des erfindungsgemäßen Bildauswerteverfahrens sind eine entsprechende Bildauswerteeinrichtung, ein Computerprogrammprodukt sowie ein computerlesbares Speichermedium vorgesehen.

Das erfindungsgemäße Konfigurationsverfahren, das erfindungsgemäße Bildauswerteverfahren, die erfindungsgemäße Bildauswerteeinrichtung sowie das erfindungsgemäße Computerprogrammprodukt können beispielsweise mittels eines oder mehrerer Prozessoren, anwendungsspezifischer integrierter Schaltungen (ASIC), digitaler Signalprozessoren (DSP) und/oder sogenannter *"*Field Programmable Gate Arrays" (FPGA) ausgeführt bzw. implementiert werden.

Vorteilhafte Ausführungsformen und Weiterbildungen der Erfindung sind in den abhängigen Ansprüchen angegeben.

Vorzugsweise können anhand der Subtyp-Zuordnungen Korrelationsparameter für eine Korrelation zwischen Bildmerkmalen und Objektsubtypen abgeleitet werden. Anhand der Korrelationsparameter kann das Subtyp-Erkennungsmodul konfiguriert werden. Derartige Korrelationen bzw. Korrelationsparameter erlauben es, mittels statistischer Standardverfahren zu gegebenen, noch nicht klassifizierten Bildmerkmalen einen hierzu am besten oder hinreichend gut korrelierenden Objektsubtyp zu ermitteln.

Gemäß einer vorteilhaften Ausführungsform der Erfindung kann ein probabilistischer Klassifikator, insbesondere ein sogenannter Bayes-Klassifikator als Subtyp-Erkennungsmodul verwendet werden. Als Korrelationsparameter können in diesem Fall geschätzte und/oder bedingte Wahrscheinlichkeiten und Unsicherheiten genutzt werden. Ein probabilistischer Klassifikator, insbesondere ein sogenannter Bayes-Klassifikator kann gegebene Bildmerkmale oder andere Merkmale derjenigen Klasse zuordnen, zu der sie mit der größten Wahrscheinlichkeit gehören.

Vorteilhafterweise kann das Subtyp-Erkennungsmodul eine zum zweiten neuronalen Netzmodul korrespondierende Verknüpfungsstruktur aufweisen. Sofern als zweites neuronales Netzmodul ein mehrlagiges Perzeptron verwendet wird, kann ein korrespondierendes Subtyp-Erkennungsmodul in diesem Sinne als mehrlagiges bayessches Perzeptron ausgestaltet sein. Bei korrespondierenden Verknüpfungsstrukturen können Lernparameter und Hyperparameter des zweiten neuronalen Netzmoduls bei der Konfiguration des Subtyp-Erkennungsmodul in vorteilhafter Weise wiederverwendet werden.

Weiterhin kann unter der Voraussetzung, dass für einen Objekttyp zu erkennende Objektsubtypen eine geordnete, durch eine vorgegebene Abfolgeinformation spezifizierte Abfolge bilden, das Subtyp-Erkennungsmodul anhand der Abfolgeinformation konfiguriert werden. Eine solche Abfolge kann beispielsweise durch die chronologische Abfolge von Entwicklungsstadien von Zelltypen gegeben sein.

Anhand einer solchen Abfolgeinformation kann bei der Konfiguration des Subtyp-Erkennungsmoduls vorzugsweise eine sogenannte ordinale Regression ausgeführt werden. Insbesondere kann eine Aktivierungsfunktion einer neuronalen Endschicht des Subtyp-Erkennungsmoduls adaptiert werden und/oder ein sogenanntes Probit-Modell verwendet werden. Darüber hinaus können Aktivierungsschwellen von Aktivierungsfunktionen gelernt werden.

Gemäß einer weiteren Ausführungsform der Erfindung kann eine a-priori-Verteilung von Konfigurationsparametern eines probabilistischen Klassifikators anhand von Lernparametern des trainierten zweiten neuronalen Netzmoduls ermittelt werden. Als Lernparameter werden hierbei insbesondere durch das Training eingestellte oder optimierte Parameter des zweiten neuronalen Netzmoduls bezeichnet. Zur Ableitung von Konfigurationsparametern des probabilistischen Klassifikators können insbesondere Markov-Ketten Monte-Carlo-Verfahren sowie variationsbasierte oder andere bayessche Ableitungsverfahren verwendet werden. Auf diese Weise kann durch das Training erhaltene Information über Lernparameter und deren Werteverteilung in vorteilhafter Weise zur Konfiguration des Subtyp-Erkennungsmoduls wiederverwendet werden.

Darüber hinaus können Konfigurationsparameter des Subtyp-Erkennungsmoduls abhängig von Trainingsparametern des ersten und/oder zweiten neuronalen Netzmoduls eingestellt werden. Die Trainingsparameter können Hyperparameter und andere das Training steuernde und/oder durch das Training erhaltene Parameter sein.

Weiterhin können beim erfindungsgemäßen Konfigurationsverfahren sowie beim erfindungsgemäßen Bildauswerteverfahren das erste neuronale Netzmodul, das zweite neuronale Netzmodul und/oder das Subtyp-Erkennungsmodul ein künstliches neuronales Netz, ein rekurrentes neuronales Netz, ein faltendes neuronales Netz, ein mehrlagiges Perzeptron, ein bayessches neuronales Netz, einen Autoencoder, eine Deep-Learning-Architektur, eine Support-Vector-Machine, ein datengetriebenes trainierbares Regressionsmodell, einen k-nächste-Nachbarn-Klassifikator, ein physikalisches Modell und/oder einen Entscheidungsbaum umfassen.

Ein Ausführungsbeispiel der Erfindung wird nachfolgend anhand der Zeichnung näher erläutert. Dabei veranschaulichen jeweils in schematischer Darstellung:
- Figur 1: Eine Konfiguration einer erfindungsgemäßen Bildauswerteeinrichtung und
- Figur 2: eine Auswertung von Bildern mittels der konfigurierten Bildauswerteeinrichtung.

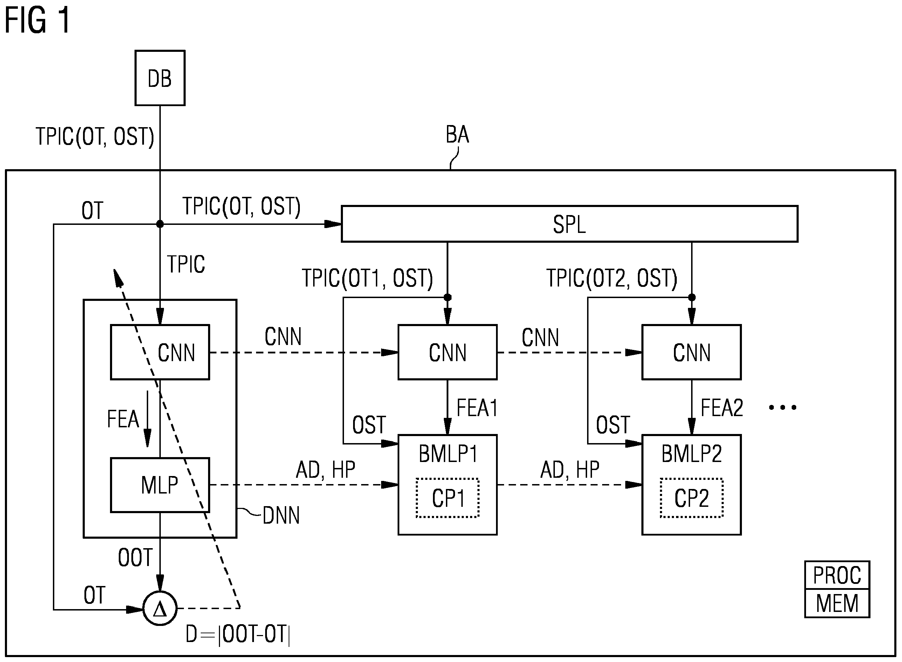

Figur 1 veranschaulicht eine Konfiguration einer erfindungsgemäßen Bildauswerteeinrichtung BA zum Erkennen von auf auszuwertenden Bildern abgebildeten Objekten, und insbesondere zum Ermitteln eines Objekttyps sowie eines Objektsubtyps eines jeweils abgebildeten Objekts.

Die Bildauswerteeinrichtung BA verfügt über einen oder mehrere Prozessoren PROC zum Ausführen von Verfahrensschritten der Bildauswerteeinrichtung BA und über einen oder mehrere mit dem Prozessor PROC gekoppelte Speicher MEM zum Speichern der von der Bildauswerteeinrichtung BA zu verarbeitenden Daten.

Im vorliegenden Ausführungsbeispiel wird als beispielhafte Anwendung der Erfindung eine medizinische Bildauswerteeinrichtung BA zum Auswerten von mikroskopischen Bildaufnahmen biologischer Zellen als zu erkennenden Objekten beschrieben. Anhand eines oder mehrerer Bilder einer Zelle sollen deren Zelltyp als Objekttyp sowie ein Entwicklungsstadium oder Zellstatus dieses Zelltyps als Objektsubtyp ermittelt werden. Zu diesem Zweck wird die Bildauswerteeinrichtung BA mittels Verfahren des maschinellen Lernens, wie nachstehend beschrieben, konfiguriert.

Im Rahmen dieser Konfiguration werden durch die Bildauswerteeinrichtung BA eine große Vielzahl von vorab klassifizierten Trainingsbildern TPIC, hier mikroskopische Bildaufnahmen von biologischen Zellen, aus einer Datenbank DB eingelesen. Klassifiziert bedeutet hierbei, dass die Trainingsbilder TPIC, zum Beispiel durch Experten, jeweils einem Objekttyp OT, das heißt einem Zelltyp und einem Objektsubtyp OST, das heißt einem Entwicklungsstadium oder Zellstatus vorab zugeordnet wurden. Der jeweilige Objekttyp OT und Objektsubtyp OST kann jeweils in Form einer Typ- bzw. Subtypkennung angegeben und durch die Bildauswerteeinrichtung BA aus der Datenbank DB in Zuordnung zum betreffenden Trainingsbild TPIC eingelesen werden.

Die eingelesenen Trainingsbilder TPIC werden in ein erstes neuronales Netzmodul CNN der Bildauswerteeinrichtung BA eingespeist. Die Trainingsbilder TPIC werden hierbei jeweils durch einen Bilddatensatz dargestellt. Das erste neuronale Netzmodul CNN umfasst vorzugsweise faltende neuronale Schichten, die ein tiefes faltendes neuronales Netz bilden. Ein solches faltendes neuronales Netz, das häufig auch als Convolutional Neural Network bezeichnet wird, eignet sich besonders zur effizienten Erkennung von Bildmerkmalen innerhalb von eingespeisten Bildern. Derartige Bildmerkmale können insbesondere in den Bildern enthaltene Kanten, Ecken, Flächen oder andere, insbesondere lokale geometrische Eigenschaften oder Beziehungen zwischen Bildelementen angeben.

Das erste neuronale Netzmodul CNN soll darauf trainiert werden, für die Objekttyperkennung besonders geeignete Bildmerkmale der eingespeisten Bilder zu extrahieren bzw. als Ausgabedaten zu generieren. Die Bildmerkmale eines jeweils eingespeisten Bildes werden dabei durch den jeweils daraus resultierenden Ausgabedatensatz des ersten neuronalen Netzmoduls CNN dargestellt. Dessen Ausgabedatensätze können somit als Bilddaten aufgefasst werden, die auf für die Objekttyperkennung wesentliche Bildmerkmale reduziert sind. Derartige Bildmerkmale werden häufig auch als Features bezeichnet.

Zum Zwecke dieses Trainings werden aus den Trainingsbildern TPIC durch das erste neuronale Netzmodul CNN generierte Trainingsausgabedatensätze FEA in ein zweites neuronales Netzmodul MLP der Bildauswerteeinrichtung BA eingespeist. Ein jeweiliger Trainingsausgabedatensatz FEA resultiert hierbei jeweils auf der Verarbeitung eines jeweiligen Trainingsbildes TPIC.

Das zweite neuronale Netzmodul MLP umfasst vorzugsweise ein mehrlagiges Perzeptron (MLP: Multi Layer Perceptron). Ein derartiges Perzeptron MLP eignet sich besonders für Klassifikationsaufgaben, hier zur Klassifikation von Objekten anhand von Bildmerkmalen.

Das erste und zweite neuronale Netzmodul CNN und MLP bilden zusammen ein tiefes neuronales Netz DNN. Die neuronalen Netze CNN und MLP können damit insbesondere auch als Teilnetze des übergeordneten tiefen neuronalen Netzes DNN aufgefasst werden.

Erfindungsgemäß soll das zweite neuronale Netzmodul MLP darauf trainiert werden, vorgegebene Objekttypen OT anhand von geeigneten Bildmerkmalen zu erkennen.

Um die vorstehenden Trainingsziele sowohl des ersten neuronalen Netzmoduls CNN, als auch des zweiten neuronalen Netzmoduls MLP zu erreichen, werden beide Netzmodule CNN und MLP gemeinsam trainiert. Dabei wird angestrebt, dass durch das zweite neuronale Netzmodul MLP aus den eingespeisten Trainingsausgabedatensätzen FEA generierte Trainingsausgabendatensätze OOT die den eingespeisten Trainingsbildern TPIC vorab zugeordneten Objekttypen OT möglichst genau reproduzieren.

Ein jeweiliger Trainingsausgabedatensatz OOT des zweiten neuronalen Netzmoduls MLP resultiert hierbei jeweils auf der Verarbeitung eines jeweiligen Trainingsbildes TPIC.

Unter einem Training sei allgemein eine Optimierung einer Abbildung von Eingabedatensätzen, hier TPIC, eines parametrisierten Systemmodells, zum Beispiel eines neuronalen Netzes, auf dessen Ausgabedatensätze, hier auf die Trainingsausgabedatensätze OOT, verstanden. Diese Abbildung wird nach vorgegebenen, gelernten und/oder zu lernenden Kriterien während einer Trainingsphase optimiert. Als Kriterien können zum Beispiel bei Klassifikationsmodellen ein Klassifikationsfehler, ein Analysefehler und/oder ein Prädiktionsfehler herangezogen werden. Im vorliegenden Fall wird durch das gemeinsame Training der Netzmodule CNN und MLP angestrebt, dass die Trainingsausgabedatensätze OOT möglichst häufig und/oder möglichst gut mit den vorab zugeordneten Objekttypen OT übereinstimmen.

Zu diesem Zweck werden Lernparameter der Netzmodule CNN und MLP durch das Training so eingestellt, dass der vom zweiten neuronalen Netzmodul MLP als Objekttyp ausgegebene Trainingsausgabedatensatz OOT den vorgegebenen Objekttyp OT dieses Trainingsbildes TPIC möglichst gut reproduziert. Die Lernparameter können hierbei zum Beispiel eine Vernetzungsstruktur von Neuronen der Netzmodule CNN und MLP und/oder Gewichte von Verbindungen zwischen diesen Neuronen umfassen.

Die angestrebte Optimierung der Lernparameter kann beispielsweise dadurch erreicht werden, dass eine Abweichung D zwischen den Trainingsausgabedatensätzen OOT und den dazu korrespondierenden, vorgegebenen Objekttypen OT in einer geeigneten Metrik ermittelt wird. Die Abweichung D repräsentiert hierbei einen Klassifikationsfehler des neuronalen Netzes DNN. Sofern die Trainingsausgabedatensätze OOT und die vorgegebenen Objekttypen durch Vektoren dargestellt werden, kann die Abweichung D zum Beispiel als mehrdimensionale euklidische oder gewichtete Distanz dieser Vektoren ermittelt werden. Die ermittelte Abweichung D wird, wie in Figur 1 durch einen strichlierten Pfeil angedeutet, zum neuronalen Netz DNN, das heißt zum gemeinsamen Training der Netzmodule CNN und MLP zurückgeführt.

Anhand der zurückgeführten Abweichung D wird das neuronale Netz DNN darauf trainiert, diese Abweichung D zu minimieren, das heißt die vorgegebenen Objekttypen OT durch die ausgegebenen Objekttypen OOT möglichst gut zu reproduzieren. Hierzu können die Lernparameter durch Standardoptimierungsverfahren so lange variiert werden, bis die Abweichung D minimal ist oder einem Minimum nahekommt. Zur Minimierung kann zum Beispiel eine Gradientenabstiegsmethode verwendet werden. Zur Durchführung der vorstehenden Optimierung steht eine Vielzahl von Standardverfahren des maschinellen Lernens zur Verfügung.

Durch das vorstehend beschriebene gemeinsame Training wird einerseits das erste Netzmodul CNN darauf trainiert, diejenigen Bildmerkmale zu erkennen bzw. zu generieren, die sich für eine Objekttyperkennung besonders gut eignen, und andererseits das zweite Netzmodul MLP gleichzeitig darauf trainiert, anhand dieser Bildmerkmale einen zugehörigen Objekttyp zu ermitteln.

Diese Form des datengetriebenen Trainings der Netzmodule CNN und MLP lässt sich in der Regel sehr erfolgreich auf Klassifikationsprobleme anwenden, für die eine große Vielzahl von Trainingsbildern verfügbar sind. Wie einleitend schon erwähnt, kommt es jedoch nicht selten vor, dass insbesondere für eine Erkennung von Objektsubtypen seltener Objekttypen zu wenige einschlägige Trainingsbilder verfügbar sind, um ein tiefes neuronales Netz effizient zu trainieren.

Aus diesem Grund werden erfindungsgemäß für die Bestimmung von Objektsubtypen anstelle des zweiten neuronalen Netzmoduls MLP probabilistische Klassifikatoren als objekttypspezfische Subtyp-Erkennungsmodule verwendet. Ein solcher probabilistischer Klassifikator kann in der Regel auch anhand einer verhältnismäßig kleinen Menge von Referenzdaten eine Klassifikation vornehmen. Zum Beispiel kann anhand der Referenzdaten eine jeweilige Wahrscheinlichkeit für ein Vorliegen eines jeweiligen Objektsubtyps ermittelt und ein Objektsubtyp mit einer hohen oder einer höchsten Wahrscheinlichkeit als Klassifikationsergebnis ausgegeben werden.

Die Subtyp-Klassifikation eines Bildes durch ein jeweiliges Subtyp-Erkennungsmodul wird anhand von klassifikationsrelevanten Bildmerkmalen dieses Bildes vorgenommen, zu deren Generierung das trainierte erste neuronale Netzmodul CNN gewissermaßen wiederverwendet wird. Diese Wiederverwendung des trainierten ersten neuronalen Netzmoduls CNN ist in Figur 1 durch strichlierte Pfeile angedeutet.

Vorteilhafterweise wird für jeden Objekttyp jeweils ein eigenes Subtyp-Erkennungsmodul zum Erkennen von Objektsubtypen anhand von Bildmerkmalen spezifisch konfiguriert.

Zu diesem Zweck werden die Trainingsbilder TPIC(OT, OST) einem Verteilungsmodul SPL der Bildauswerteeinrichtung BA zugeführt und von diesem abhängig von einem jeweils zugeordneten Objekttyp, hier OT1, OT2,... auf objekttypspezifische Konfigurationspipelines verteilt. In Figur 1 sind aus Übersichtlichkeitsgründen nur zwei Objekttypen OT1 und OT2 explizit angegeben.

So werden die dem Objekttyp OT1 zugeordneten Trainingsbilder TPIC(OT1, OST) dem trainierten ersten neuronalen Netzmodul CNN zugeführt, das daraus für den Objekttyp OT1 spezifische Bildmerkmale FEA1 als Trainingsausgabendatensätze generiert. Die Bildmerkmale FEA1 eines jeweiligen Trainingsbildes TPIC(OT1, OST) werden dem Objektsubtyp OST dieses Trainingsbildes zugeordnet und in dieser Zuordnung zu einem für den Objekttyp OT1 spezifischen probabilistischen Klassifikator BMLP1 als Subtyp-Erkennungsmodul übermittelt. Anhand dieser Objektzuordnungen wird der probabilistische Klassifikator BMLP1 zur Erkennung von Objektsubtypen dieses Objekttyps OT1 konfiguriert.

Der probabilistische Klassifikator BMLP1 ist vorzugsweise als bayessches neuronales Netz ausgestaltet. Dieses weist vorteilhafterweise eine zum zweiten neuronalen Netzmodul MLP korrespondierende Verknüpfungsstruktur zwischen Neuronen bzw. eine korrespondierende Architektur auf. Im vorliegenden Ausführungsbeispiel ist der probabilistische Klassifikator BMLP1 also als mehrlagiges bayessches Perzeptron implementiert.

Die Konfiguration des probabilistischen Klassifikators BMLP1 kann beispielsweise derart erfolgen, dass die objekttypspezifischen Bildmerkmale FEA1 aller oder nahezu aller Trainingsbilder TPIC(OT1, OST) des Objekttyps OT1 in Zuordnung zum jeweiligen Objektsubtyp OST des jeweiligen Trainingsbildes im probabilistischen Klassifikator BMLP1 gespeichert werden. Bei seltenen Objekttypen OT1 erfordert dies einen verhältnismäßig geringen Speicheraufwand. Darüber hinaus bleibt dadurch - anders als beim gewöhnlichen Training eines neuronalen Netzes - jegliche Trainingsinformation über eine Zuordnung von Bildmerkmalen und Objektsubtypen im Wesentlichen erhalten.

Mittels eines so konfigurierten probabilistischen Klassifikators BMLP1 können zur Erkennung eines Objektsubtyps beispielsweise die Bildmerkmale eines zu klassifizierenden Bildes auf einfache Weise mit allen gespeicherten Bildmerkmalen dieses Objekttyps verglichen werden und ein Objektsubtyp mit einer geringsten oder einer geringen Abweichung als Klassifikationsergebnis ermittelt werden. Eine Ausweitung eines solchen Vergleichs über alle Trainingsbilder hinweg, das heißt auch über häufige Objekttypen, ist dagegen aufgrund der oft sehr großen Menge an Trainingsbildern in der Regel nicht mit akzeptablem Aufwand durchführbar.

Alternativ oder zusätzlich können anhand der Zuordnung von Bildmerkmalen FEA1 zu Objektsubtypen OST statistische Korrelationen zwischen den Bildmerkmalen FEA1 und den Objektsubtypen OST ermittelt und durch objektspezifische Korrelationsparameter CP1 angegeben oder dargestellt werden. Anhand dieser Korrelationen bzw. Korrelationsparameter CP1 kann der probabilistische Klassifikator BMLP1 konfiguriert werden. Zu diesem Zweck kann eine Vielzahl von bekannten Standardverfahren genutzt werden, durch die aus den Korrelationen die zur Konfiguration bayesscher neuronaler Netze benötigten bedingten Wahrscheinlichkeiten, Unsicherheiten und/oder probabilistischen Graphen als Konfigurationsparameter ermittelt werden.

Weiterhin kann insbesondere bei der Klassifikation von Entwicklungsstadien von Zelltypen eine Abfolgeinformation über eine notwendige oder wahrscheinliche Abfolge der Entwicklungsstadien durch den probabilistischen Klassifikator BMLP1 als Zusatzinformation oder Nebenbedingung bei der Subtyperkennung ausgewertet werden. Vorzugsweise wird anhand der Abfolgeinformation eine sogenannte ordinale Regression bei der Konfiguration des probabilistischen Klassifikators BMLP1 ausgeführt.

Darüber hinaus kann aus den durch das Training eingestellten Lernparametern des zweiten neuronalen Netzmoduls MLP, das heißt hier aus den optimierten Gewichten von neuronalen Verbindungen und/oder aus deren statistischer Verteilung eine sogenannte a-priori-Verteilung AD für die Korrelationsparameter CP1 des probabilistischen Klassifikators BMLP1 abgeleitet werden. Auf diese Weise können die Lernparameter sowie andere Trainingsparameter des zweiten neuronalen Netzmoduls MLP - wie in Figur 1 durch strichlierte Pfeile angedeutet - als Hyperparameter HP für die Konfiguration des probabilistischen Klassifikators BMLP1 verwendet werden.

Die vorstehend spezifisch für den Objekttyp OT1 beschriebene Verfahrensweise wird analog für den Objekttyp OT2 und gegebenenfalls für weitere Objekttypen durchgeführt, um auf diese Weise ein oder mehrere weitere objekttypspezifische Subtyp-Erkennungsmodule BMLP2,... der Bildauswerteeinrichtung BA zur Erkennung von Objektsubtypen innerhalb des betreffenden Objekttyps zu konfigurieren.

Mittels der wie vorstehend beschriebenen trainierten und konfigurierten Bildauswerteeinrichtung BA sollen nun neu aufgenommene und/oder noch nicht klassifizierte Bilder ausgewertet werden.

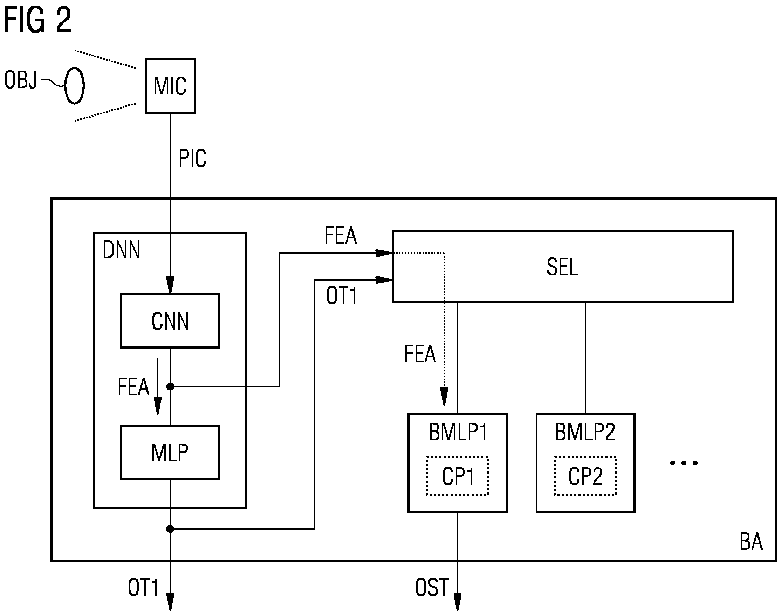

Figur 2 veranschaulicht eine solche Auswertung eines Bildes PIC eines Objekts OBJ mittels der trainierten und konfigurierten Bildauswerteeinrichtung BA. Insofern in Figur 2 die gleichen Bezugszeichen verwendet werden wie in Figur 1, werden die gleichen Entitäten bezeichnet.

Das aufgenommene Objekt OBJ ist im vorliegenden Ausführungsbeispiel eine biologische Zelle, deren Zelltyp als Objekttyp und deren Entwicklungsstadium als Objektsubtyp durch die konfigurierte Bildauswerteeinrichtung BA erkannt werden sollen. Das auszuwertende Bild PIC wird mittels eines mit einer Kamera versehenen Mikroskops MIC aufgenommen.

Das aufgenommene Bild PIC wird von der Bildauswerteeinrichtung BA eingelesen und in das trainierte erste neuronale Netzmodul CNN eingespeist. Das trainierte erste neuronale Netzmodul CNN generiert aus dem Bild PIC einen Ausgabedatensatz FEA, der gemäß dem oben beschriebenen Trainingsziel bevorzugt diejenigen Bildmerkmale umfasst, die sich zur Objekttyperkennung besonders gut eignen. Der vom trainierten ersten neuronalen Netzmodul CNN generierte Ausgabedatensatz FEA wird vom trainierten ersten neuronalen Netzmodul CNN in das trainierte zweite neuronale Netzmodul MLP eingespeist. Das trainierte zweite neuronale Netzmodul MLP leitet aus dem Ausgabedatensatz FEA des ersten neuronalen Netzmoduls CNN einen Ausgabedatensatz ab, der gemäß dem obigen Trainingsziel einen Objekttyp des aufgenommenen Objekts OBJ möglichst korrekt angeben soll. Im vorliegenden Ausführungsbeispiel sei angenommen, dass der Ausgabedatensatz des trainierten zweiten neuronalen Netzmoduls MLP den Objekttyp OT1 für das Objekt OBJ angibt .

Die vom trainierten ersten neuronalen Netzmodul CNN generierten Bildmerkmale FEA sowie der ermittelte Objekttyp OT1 werden zu einem Selektionsmodul SEL der Bildauswerteeinrichtung BA übermittelt. Das Selektionsmodul SEL ist mit den jeweils objekttypspezifisch konfigurierten probabilistischen Klassifikatoren BMLP1, BMLP2,... gekoppelt und dient zum Selektieren eines der probabilistischen Klassifikatoren BMLP1, BMLP2, ... abhängig vom jeweils abgeleiteten Objekttyp. Im vorliegenden Ausführungsbeispiel wurde OT1 als Objekttyp ermittelt, infolgedessen der für den Objekttyp OT1 spezifische probabilistische Klassifikator BMLP1 durch das Selektionsmodul SEL selektiert wird.

Weiterhin werden die Bildmerkmale FEA vom Selektionsmodul SEL - wie in Figur 2 durch einen punktierten Pfeil angedeutet - spezifisch zum selektierten probabilistischen Klassifikator BMLP1 übermittelt. Der selektierte Klassifikator BMLP1 korreliert die Bildmerkmale FEA anhand seiner Korrelationsparameter CP1 und/oder durch Vergleich mit gespeicherten Trainingsausgabedatensätzen bzw. Bildmerkmalen des ersten neuronalen Netzmoduls CNN. Dabei wird vorzugsweise derjenige Objektsubtyp ermittelt, der gemäß den Korrelationsparametern CP1 am besten mit den Bildmerkmalen FEA korreliert, das heißt eine größte oder hinreichend große Korrelation aufweist. Alternativ oder zusätzlich kann ein Abstand zwischen den Bildmerkmalen FEA und gespeicherten Trainingsausgabedatensätzen bzw. Bildmerkmalen des ersten neuronalen Netzmoduls CNN bestimmt werden. In diesem Fall kann derjenige Objektsubtyp ermittelt werden, dessen zugeordneter Trainingsausgabedatensatz einen geringsten oder hinreichend geringen Abstand aufweist. Ein auf die vorstehenden Weisen ermittelter Objektsubtyp kann als wahrscheinlichster Objektsubtyp OST des Objekts OBJ aufgefasst werden.

Der durch das trainierte zweite neuronale Netzmodul MLP ermittelte Objekttyp OT1 und der hier durch den Klassifikator BMLP1 ermittelte Objektsubtyp OST werden schließlich durch die Bildauswerteeinrichtung BA als Klassifikationsergebnis für das Objekt OBJ ausgegeben.

Durch die Aufteilung der Klassifikationsaufgabe in eine datengetriebene Objekttyperkennung (häufig auch als Big-Data-Ansatz bezeichnet) und eine auch für eine geringe Menge von Trainingsdaten (Small-Data) geeignete probabilistische Objektsubtyperkennung kann eine Erkennungssicherheit häufig wesentlich verbessert werden. Dies gilt insbesondere für die Erkennung von Objektsubtypen seltener Objekttypen.

Neben der vorstehend beschriebenen Anwendung in der medizinischen Diagnostik kann das erfindungsgemäße Konfigurationsverfahren und/oder Bildauswerteverfahren in vielen weiteren technischen Bereichen zur effizienten Klassifikation von abgebildeten Objekten eingesetzt werden. So zum Beispiel zur optischen Überwachung von technischen oder nichttechnischen Systemen, wie beispielsweise Produktionsanlagen oder landwirtschaftliche Nutzflächen, für eine optische Sensorik von autonomen Systemen oder auch für allgemeine optische Klassifikationsaufgaben.

## Patentansprüche

1. Verfahren zum Konfigurieren einer Bildauswerteeinrichtung (BA) zum Ermitteln eines Objekttyps (OT, OT1, OT2) und Objektsubtyps (OST) eines abgebildeten Objekts (OBJ), wobei
a) eine Vielzahl von jeweils einem Objekttyp (OT, OT1, OT2) und einem Objektsubtyp (OST) zugeordneten Trainingsbildern (TPIC) in ein erstes neuronales Netzmodul (CNN) zur Erkennung von Bildmerkmalen eingespeist wird,
b) Trainings-Ausgabedatensätze (FEA) des ersten neuronalen Netzmoduls (CNN) in ein zweites neuronales Netzmodul (MLP) zur Erkennung von Objekttypen anhand von Bildmerkmalen eingespeist werden,
c) das erste und das zweite neuronale Netzmodul (CNN, MLP) gemeinsam darauf trainiert werden, dass Trainings-Ausgabedatensätze (OOT) des zweiten neuronalen Netzmoduls (MLP) die den Trainingsbildern (TPIC) zugordneten Objekttypen (OT) zumindest näherungsweise reproduzieren, und
d) für einen jeweiligen Objekttyp (OT1, OT2):
- diesem Objekttyp (OT1, OT2) zugeordnete Trainingsbilder (TPIC) in das trainierte erste neuronale Netzmodul (CNN) eingespeist werden unter Wiederverwendung des trainierten ersten neuronalen Netzmoduls (CNN),
- dessen für ein jeweiliges Trainingsbild (TPIC) generierter Trainings-Ausgabedatensatz (FEA1, FEA2) dem Objektsubtyp (OST) des jeweiligen Trainingsbildes (TPIC) zugeordnet wird, und
- anhand dieser Subtyp-Zuordnungen ein Subtyp-Erkennungsmodul (BMLP1, BMLP2) zum Erkennen von Objektsubtypen (OST) anhand von Bildmerkmalen für die Bildauswerteeinrichtung (BA) konfiguriert wird, wobei für jeden Objekttyp jeweils ein eigenes Subtyp-Erkennungsmodul zum Erkennen von Objektsubtypen anhand von Bildmerkmalen spezifisch konfiguriert wird
mittels Zuführung der Trainingsbilder TPIC (OT, OST) zu einem Verteilungsmodul (SPL) der Bildauswerteeinrichtung (BA) und von diesem abhängig von einem jeweils zugeordneten Objekttyp (OT1, OT2) auf objekttypspezifische Konfigurations-pipelines verteilt wird,
wobei die dem Objekttyp (OT1) zugeordneten Trainingsbilder TPIC (OT1, OST) dem trainierten ersten neuronalen Netzmodul (CNN) zugeführt werden, das daraus für den Objekttyp (OT1) spezifische Bildmerkmale (FEA1) als Trainingsausgabendatensätze generiert, wobei die Bildmerkmale (FEA1) eines jeweiligen Trainingsbildes TPIC(OT1, OST) dem Objektsubtyp (OST) dieses Trainingsbildes zugeordnet werden und in dieser Zuordnung zu einem für den Objekttyp (OT1) spezifischen probabilistischen Klassifikator (BMLP1) als Subtyp-Erkennungsmodul übermittelt werden, wobei anhand dieser Objektzuordnungen der probabilistische Klassifikator (BMLP1) zur Erkennung von Objektsubtypen dieses Objekttyps (OT1) konfiguriert wird.

2. Verfahren nach Anspruch 1, **dadurch gekennzeichnet,**
**dass** anhand der Subtyp-Zuordnungen Korrelationsparameter (CP1, CP2) für eine Korrelation zwischen Bildmerkmalen und Objektsubtypen (OST) abgeleitet werden, und
**dass** das Subtyp-Erkennungsmodul (BMLP1, BMLP2) anhand der Korrelationsparameter (CP1, CP2) konfiguriert wird.

3. Verfahren nach einem der vorhergehenden Ansprüche, **dadurch gekennzeichnet, dass**
ein probabilistischer Klassifikator als Subtyp-Erkennungsmodul (BMLP1, BMLP2) verwendet wird.

4. Verfahren nach einem der vorhergehenden Ansprüche, **dadurch gekennzeichnet, dass** das Subtyp-Erkennungsmodul (BMLP1, BMLP2) eine zum zweiten neuronalen Netzmodul (MLP) korrespondierende Verknüpfungsstruktur aufweist.

5. Verfahren nach einem der vorhergehenden Ansprüche, **dadurch gekennzeichnet,**
**dass** für einen Objekttyp (OT, OT1, OT2) zu erkennende Objektsubtypen (OST) eine geordnete, durch eine vorgegebene Abfolgeinformation spezifizierte Abfolge bilden, und
**dass** das Subtyp-Erkennungsmodul (BMLP1, BMLP2) anhand der Abfolgeinformation konfiguriert wird

6. Verfahren nach Anspruch 5, **dadurch gekennzeichnet,**
**dass** bei der Konfiguration des Subtyp-Erkennungsmoduls (BMLP1, BMLP2) eine ordinale Regression anhand der Abfolgeinformation durchgeführt wird.

7. Verfahren nach einem der Ansprüche 3 bis 6, **dadurch gekennzeichnet,**
**dass** eine a-priori-Verteilung von Konfigurationsparametern des probabilistischen Klassifikators (BMLP1, BMLP2) anhand von Lernparametern des trainierten zweiten neuronalen Netzmoduls (MLP) ermittelt wird.

8. Verfahren nach einem der vorhergehenden Ansprüche, **dadurch gekennzeichnet,**
**dass** Konfigurationsparameter des Subtyp-Erkennungsmoduls (BMLP1, BMLP2) abhängig von Trainingsparametern des ersten (CNN) und/oder zweiten neuronalen Netzmoduls (MLP) eingestellt werden.

9. Bildauswerteverfahren zum Ermitteln eines Objekttyps (OT, OT1, OT2) und Objektsubtyps (OST) eines abgebildeten Objekts (OBJ), wobei
a) ein auszuwertendes Bild (PIC) in ein gemäß einem der vorhergehenden Ansprüche trainiertes, erstes neuronales Netzmodul (CNN) eingespeist wird,
b) ein resultierender Ausgabedatensatz (FEA) des trainierten ersten neuronalen Netzmoduls (CNN) in ein gemäß einem der vorhergehenden Ansprüche trainiertes, zweites neuronales Netzmodul (MLP) eingespeist wird,
c) aus einem resultierenden Ausgabedatensatz des trainierten zweiten neuronalen Netzmoduls (MLP) ein Objekttyp (OT1) abgeleitet wird,
d) ein für den abgeleiteten Objekttyp (OT1) spezifisches, gemäß einem der vorhergehenden Ansprüche konfiguriertes Subtyp-Erkennungsmodul (BMLP1) selektiert wird,
e) durch das selektierte Subtyp-Erkennungsmodul (BMLP1) ein mit dem Ausgabedatensatz (FEA) des trainierten ersten neuronalen Netzmoduls (CNN) korrelierender Objektsubtyp (OST) ermittelt wird, und
f) der abgeleitete Objekttyp (OT1) sowie der ermittelte Objektsubtyp (OST) ausgegeben werden.

10. Bildauswerteverfahren nach Anspruch 9, **dadurch gekennzeichnet,**
**dass** beim Ermitteln des korrelierenden Objektsubtyps (OST) ein jeweiliger Abstand zwischen dem Ausgabedatensatz (FEA) des trainierten ersten neuronalen Netzmoduls (CNN) und mehreren gespeicherten Trainings-Ausgabedatensätzen des ersten neuronalen Netzmoduls (CNN) ermittelt wird,
**dass** ein Trainings-Ausgabedatensatz selektiert wird, der einen geringeren Abstand als ein anderer Trainings-Ausgabedatensatz aufweist, und
**dass** ein dem selektierten Trainings-Ausgabedatensatz zugeordneter Objektsubtyp als korrelierender Objektsubtyp (OST) ermittelt wird.

11. Verfahren nach einem der vorhergehenden Ansprüche,
**dadurch gekennzeichnet, dass**
das erste neuronale Netzmodul (CNN), das zweite neuronale Netzmodul (MLP) und/oder das Subtyp-Erkennungsmodul (BMLP1, BMLP2) ein künstliches neuronales Netz, ein rekurrentes neuronales Netz, ein faltendes neuronales Netz, ein mehrlagiges Perzeptron, ein bayessches neuronales Netz, einen Autoencoder, eine Deep-Learning-Architektur, eine Support-Vector-Machine, ein datengetriebenes trainierbares Regressionsmodell, einen k-nächste-Nachbarn-Klassifikator, ein physikalisches Modell und/oder einen Entscheidungsbaum umfasst.

12. Bildauswerteeinrichtung (BA) zum Ermitteln eines Objekttyps (OT, OT1, OT2) und Objektsubtyps (OST) eines abgebildeten Objekts (OBJ), eingerichtet zum Ausführen eines Verfahrens gemäß einem der vorhergehenden Ansprüche.

13. Computerprogrammprodukt eingerichtet zum Ausführen eines Verfahrens nach einem der Ansprüche 1 bis 11.

14. Computerlesbares Speichermedium mit einem Computerprogrammprodukt nach Anspruch 13.

## Claims

1. Method for configuring an image evaluation device (BA) for determining an object type (OT, OT1, OT2) and object sub-type (OST) of an imaged object (OBJ), wherein
a) a multiplicity of training images (TPIC) respectively assigned to an object type (OT, OT1, OT2) and an object sub-type (OST) are fed into a first neural network module (CNN) for recognizing image features,
b) training output data sets (FEA) of the first neural network module (CNN) are fed into a second neural network module (MLP) for recognizing object types on the basis of image features,
c) the first and second neural network modules (CNN, MLP) are jointly trained to the effect that training output data sets (OOT) of the second neural network module (MLP) at least approximately reproduce the object types (OT) assigned to the training images (TPIC), and
d) for a respective object type (OT1, OT2):
- training images (TPIC) assigned to this object type (OT1, OT2) are fed into the trained first neural network module (CNN) with reuse of the trained first neural network module (CNN),
- the latter's training output data set (FEA1, FEA2) generated for a respective training image (TPIC) is assigned to the object sub-type (OST) of the respective training image (TPIC), and
- these sub-type assignments are used as a basis to configure a sub-type recognition module (BMLP1, BMLP2) for recognizing object sub-types (OST) on the basis of image features for the image evaluation device (BA), wherein for each object type in each case a dedicated sub-type recognition module is specifically configured for recognizing object sub-types on the basis of image features,
by means of the training images TPIC (OT, OST) being fed to a distribution module (SPL) of the image evaluation device (BA) there is distribution among object-type-specific configuration pipelines by said module depending on a respectively assigned object type (OT1, OT2),
wherein the training images TPIC (OT1, OST) assigned to the object type (OT1) are fed to the trained first neural network module (CNN), which generates therefrom image features (FEA1) specific to the object type (OT1) as training output data sets, wherein the image features (FEA1) of a respective training image TPIC(OT1, OST) are assigned to the object sub-type (OST) of this training image and with this assignment are communicated to a probabilistic classifier (BMLP1) as sub-type recognition module that is specific to the object type (OPTI) wherein these object assignments are used as a basis to configure the probabilistic classifier (BMLP1) for recognizing object sub-types of this object type (OPTI)

2. Method according to Claim 1, **characterized**
**in that** the sub-type assignments are used as a basis to derive correlation parameters (CP1, CP2) for a correlation between image features and object sub-types (OST), and
**in that** the sub-type recognition module (BMLP1, BMLP2) is configured on the basis of the correlation parameters (CP1, CP2).

3. Method according to either of the preceding claims, **characterized in that**
a probabilistic classifier is used as sub-type recognition module (BMLP1, BMLP2).

4. Method according to any of the preceding claims, **characterized in that** the sub-type recognition module (BMLP1, BMLP2) has a linkage structure corresponding to the second neural network module (MLP) .

5. Method according to any of the preceding claims, **characterized**
**in that** object sub-types (OST) to be recognized for an object type (OT, OT1, OT2) form an ordered sequence specified by predefined sequence information, and
**in that** the sub-type recognition module (BMLP1, BMLP2) is configured on the basis of the sequence information.

6. Method according to Claim 5, **characterized**
**in that** during the configuration of the sub-type recognition module (BMLP1, BMLP2) an ordinal regression is carried out on the basis of the sequence information.

7. Method according to any of Claims 3 to 6, **characterized**
**in that** an a priori distribution of configuration parameters of the probabilistic classifier (BMLP1, BMLP2) is determined on the basis of learning parameters of the trained second neural network module (MLP).

8. Method according to any of the preceding claims, **characterized**
**in that** configuration parameters of the sub-type recognition module (BMLP1, BMLP2) are set depending on training parameters of the first (CNN) and/or second (MLP) neural network module.

9. Image evaluation method for determining an object type (OT, OT1, OT2) and object sub-type (OST) of an imaged object (OBJ), wherein
a) an image (PIC) to be evaluated is fed into a first neural network module (CNN) trained in a manner according to any of the preceding claims,
b) a resulting output data set (FEA) of the trained first neural network module (CNN) is fed into a second neural network module (MLP) trained in a manner according to any of the preceding claims,
c) an object type (OT1) is derived from a resulting output data set of the trained second neural network module (MLP),
d) a sub-type recognition module (BMLP1) specific to the derived object type (OT1) and configured in a manner according to any of the preceding claims is selected,
e) an object sub-type (OST) correlating with the output data set (FEA) of the trained first neural network module (CNN) is determined by the selected sub-type recognition module (BMLP1), and
f) the derived object type (OT1) and also the determined object sub-type (OST) are output.

10. Image evaluation method according to Claim 9, **characterized in that** determining the correlating object sub-type (OST) involves determining a respective distance between the output data set (FEA) of the trained first neural network module (CNN) and a plurality of stored training output data sets of the first neural network module (CNN),
**in that** a training output data set having a smaller distance than another training output data set is selected, and
**in that** an object sub-type assigned to the selected training output data set is determined as correlating object sub-type (OST) .

11. Method according to any of the preceding claims, **characterized in that**
the first neural network module (CNN), the second neural network module (MLP) and/or the sub-type recognition module (BMLP1, BMLP2) comprise(s) an artificial neural network, a recurrent neural network, a convolutional neural network, a multilayer perceptron, a Bayesian neural network, an autoencoder, a deep learning architecture, a support vector machine, a data-driven trainable regression model, a k-nearest neighbour classifier, a physical model and/or a decision tree.

12. Image evaluation device (BA) for determining an object type (OT, OT1, OT2) and object sub-type (OST) of an imaged object (OBJ), designed for carrying out a method according to any of the preceding claims.

13. Computer program product designed for carrying out a method according to any of Claims 1 to 11.

14. Computer-readable storage medium having a computer program product according to Claim 13.

## Revendications

1. Procédé de configuration d'un dispositif (BA) d'évaluation d'image pour la détermination d'un type (OT, OT1, OT2) d'objet et d'un sous-type (OST) d'objet d'un objet (OBJ) représenté, dans lequel
a) on charge, pour la reconnaissance de caractéristiques d'image, dans un premier module (CNN) de réseau neuronal, une pluralité d'images (TPIC) d'apprentissage affectées respectivement à un type (OT, OT1, OT2) d'objet et à un sous-type (OST) d'objet,
b) on charge, pour la reconnaissance de type d'objet à l'aide de caractéristiques d'image, des ensembles (FEA) de données d'édition d'apprentissage du premier module (CNN) de réseau neuronal dans un deuxième module (MLP) de réseau neuronal,
c) on apprend conjointement au premier et au deuxième modules (CNN, MLP) de réseau neuronal que des ensembles (OOT) de données d'édition d'apprentissage du deuxième module (MLP) de réseau neuronal reproduisent au moins approximativement les types (OT) d'objets affectés aux images (TPIC) d'apprentissage, et
d) pour un type (OT1, OT2) respectif d'objet :
- on charge, dans le premier module (CNN) de réseau neuronal ayant subi un apprentissage, des images (TPIC) d'apprentissage affectées à ce type (OT1, OT2) d'objet en réutilisant le premier module (CNN) de réseau neuronal ayant subi un apprentissage,
- dont l'ensemble (FEA1, FEA2) de données d'édition d'apprentissage créé pour une image (TPIC) d'apprentissage respective est affecté au sous-type (OST) d'objet de l'image (TPIC) d'apprentissage respective, et
- à l'aide de ces affectations de sous-type, on configure, à l'aide de caractéristiques d'image pour le dispositif (BA) d'évaluation d'image, un module (BMLP1, BMLP2) de reconnaissance de sous-type pour la reconnaissance de sous-type (OST) d'objet, dans lequel, pour chaque type d'objet, on configure spécifiquement respectivement son propre module de reconnaissance de sous-type pour la reconnaissance de sous-type d'objet à l'aide de caractéristiques d'image
au moyen d'un envoi des images TPIC (OT, OST) d'apprentissage à un module (SPL) de répartition du dispositif (BA) d'évaluation d'image et, par celui-ci, on le répartit, en fonction d'un type (OT1, OT2) d'objet affecté respectivement, à des pipelines de configuration spécifiques au type d'objet,
dans lequel on envoie les images TPIC (OT1, OST) d'apprentissage affectées au type (OT1) d'objet au premier module (CNN) de réseau neuronal ayant subi un apprentissage, qui en crée des caractéristiques (FEA1) d'image spécifiques au type (OT1) d'objet comme ensemble de données d'édition d'apprentissage, dans lequel on affecte les caractéristiques (FEA1) d'image d'une image TPIC (OT1, OST) d'apprentissage respective au sous-type (OST) d'objet de cette image d'apprentissage et, dans cette affectation, on les transmet comme module de reconnaissance de sous-type à un classificateur (BMLP1) probabiliste spécifique au type (OT1) d'objet, dans lequel, à l'aide de ces affectations d'objet, on configure le classificateur (BMLP1) probabiliste pour la reconnaissance de sous-type d'objet de ce type (OT1) d'objet.

2. Procédé suivant la revendication 1, **caractérisé en ce qu'**à l'aide des affectations de sous-type, on déduit des paramètres (CP1, CP2) de corrélation pour une corrélation entre des caractéristiques d'image et des sous-types (OST) d'objet, et **en ce que** l'on configure le module (BMLP1, BMLP2) de reconnaissance de sous-type à l'aide des paramètres (CP1, CP2) de corrélation.

3. Procédé suivant l'une des revendications précédentes, **caractérisé**
**en ce que** l'on utilise un classificateur probabiliste comme module (BMLP1, BMLP2) de reconnaissance de sous-type.

4. Procédé suivant l'une des revendications précédentes, **caractérisé**
**en ce que** le module (BMLP1, BMLP2) de reconnaissance de sous-type a une structure de combinaison correspondant au deuxième module (MLP) de réseau neuronal.

5. Procédé suivant l'une des revendications précédentes, **caractérisé**
**en ce que** des sous-types (OST) d'objet à reconnaître pour un type (OT, OT1, OT2) d'objet forment une séquence ordonnée spécifiée par une information de séquence donnée à l'avance, et
**en ce que** l'on configure le module (BMLP1, BMLP2) de reconnaissance de sous-type à l'aide de l'information de séquence.

6. Procédé suivant la revendication 5, **caractérisé**
**en ce que**, lors de la configuration du module (BMLP1, BMLP2) de reconnaissance de sous-type, on effectue une régression ordinale à l'aide de l'information de séquence.

7. Procédé suivant l'une des revendications 3 à 6, **caractérisé en ce que** l'on détermine une répartition à priori de paramètres de configuration du classificateur (BMLP1, BMLP2) probabiliste à l'aide de paramètres d'enseignement du deuxième module (MLP) de réseau neuronal ayant subi un apprentissage.

8. Procédé suivant l'une des revendications précédentes, **caractérisé**
**en ce que** l'on établit des paramètres de configuration du module (BMLP1, BMLP2) de reconnaissance de sous-type en fonction de paramètres d'apprentissage du premier (CNN) et/ou du deuxième modules (MLP) de réseau neuronal.

9. Procédé d'évaluation d'image pour la détermination d'un type (OT, OT1, OT2) d'objet et d'un sous-type (OST) d'objet d'un objet (OBJ) représenté, dans lequel
a) on charge une image (PIC) à évaluer dans un premier module (CNN) de réseau neuronal ayant subi un apprentissage suivant l'une des revendications précédentes,
b) on charge un ensemble (FEA) de données d'édition, qui s'ensuit, du premier module (CNN) de réseau neuronal ayant subi un apprentissage dans un deuxième module (MLP) de réseau neuronal ayant subi un apprentissage suivant l'une des revendications précédentes,
c) on déduit un type (OT1) d'objet d'un ensemble de données d'édition, qui s'ensuit du deuxième module (MLP) de réseau neuronal ayant subi un apprentissage,
d) on sélectionne un module (BMLP1) de reconnaissance de sous-type spécifique configuré suivant l'une des revendications précédentes, spécifique au type (OT1) d'objet déduit,
e) on détermine, par le module (BMLP1) de reconnaissance de sous-type sélectionné, on détermine un sous-type (OST) d'objet se corrélant à l'ensemble (FEA) de données d'édition du premier module (CNN) de réseau neuronal ayant subi un apprentissage, et
f) on sort le type (OT1) d'objet déduit, ainsi que le sous-type (OST) d'objet déterminé.

10. Procédé d'évaluation d'image suivant la revendication 9, **caractérisé**
**en ce que**, lors de la détermination du sous-type (OST) d'objet se corrélant, on détermine une distance respective entre l'ensemble (FEA) de données d'édition du premier module (CNN) de réseau neuronal ayant subi un apprentissage et plusieurs ensembles de données d'édition d'apprentissage mis en mémoire du premier module (CNN) de réseau neuronal,
**en ce que** l'on sélectionne un ensemble de données d'édition d'apprentissage, qui a une distance plus petite qu'un autre ensemble de données d'édition d'apprentissage, et
**en ce que** l'on détermine, comme sous-type (OST) d'objet se corrélant, un sous-type d'objet affecté à l'ensemble de données d'édition d'apprentissage sélectionné.

11. Procédé d'évaluation d'image suivant l'une des revendications précédentes, **caractérisé**
**en ce que** le premier module (CNN) de réseau neuronal, le deuxième module (MLP) de réseau neuronal et/ou le module (BMLP1, BMLP2) de reconnaissance de sous-type comprend un réseau neuronal artificiel, un réseau neuronal récurrent, un réseau neuronal de convolation, un perceptron à plusieurs couches, un réseau neuronal de Bayes, un autocodeur, une architecture deep-learning, une machine à vecteur de support, un modèle de régression pouvant subir un apprentissage par des données, une méthode des k plus proches voisins, un modèle physique et/ou un arbre de décision.

12. Dispositif (BA) d'évaluation d'image pour la détermination d'un type (OT, OT1, OT2) d'objet et d'un sous-type (OST) d'objet d'un objet (OBJ) représenté, agencé pour exécuter un procédé suivant l'une des revendications précédentes.

13. Produit de programme d'ordinateur agencé pour exécuter un procédé suivant l'une des revendications 1 à 11.

14. Support de mémoire, déchiffrable par ordinateur, ayant un produit de programme d'ordinateur suivant la revendication 13.
